# EUROPÄISCHE PATENTSCHRIFT

(11) **EP 1 908 669 B1**
(45) Veröffentlichungstag und Bekanntmachung des Hinweises auf die Patenterteilung: **02.09.2009**
(21) Anmeldenummer: 07018045.0
(22) Anmeldetag: 14.09.2007
(51) Int. Cl.: B62D 27/02, B62D 29/00

(54) **Verfahren zur Herstellung eines Kraftfahrzeugbauteils**
Method for manufacturing a motor vehicle part
Procédé de fabrication d'un élément de véhicule automobile

(30) Priorität: 06.10.2006 DE 102006047805
(43) Veröffentlichungstag der Anmeldung: 09.04.2008
(73) Patentinhaber: Benteler Automobiltechnik GmbH, 33104 Paderborn (DE)
(72) Erfinder: Handing, Christian, 33449 Langenberg (DE)
(74) Vertreter: Ksoll, Peter

(56) Entgegenhaltungen:
- DE-A1- 10 339 350

## Beschreibung

Die Erfindung betrifft ein Verfahren zur Herstellung eines Kraftfahrzeugbauteils aus wenigstens zwei Bauteilkomponenten, die über eine Klebeverbindung miteinander gefügt werden.

Technisch betrachtet ist das Kleben ein stoffschlüssiges Fügeverfahren, welches nahezu alle Werkstoffe miteinander und untereinander verbinden kann. Diesem Fügeverfahren kommt auch im Automobilbau zunehmend größere Bedeutung zu.

Durch die DE 103 39 350 A1 zählt ein Verfahren zum Umformen von Blechen. Hierbei werden eine Grundplatine und zumindest eine Verstärkungsplatine zusammen umgeformt und nach dem Umformen wieder vereinzelt. Anschließend werden die Grundplatine und die Verstärkungsplatine unter Eingliederung einer Verbindungsschicht aus Klebstoff wieder zusammengefügt, wobei die Wärme aus dem Umformprozess zum Aushärten des Klebstoffs ausgenutzt wird.

Bei dem aus der DE 103 52 513 A1 bekannten Verfahren erfolgt eine Verpressung eines Halbzeugs in einem Heißpresswerkzeug zu einem Trägerteil. Anschließend wird auf das Trägerteil zumindest ein Dekorelement mittels eines duroplastischen Abhäsionsmittels unter Ausnutzung der Restwärme des Trägerteils aufkaschiert.

Die DE 101 16 282 A1 erläutert ein Karosserieteil, welches ein inneres und ein äußeres Blech umfasst, die durch eine randseitige Falz- und Klebeverbindung miteinander verbunden sind. Bei dem aus der DE 10 2004 033 184 A1 bekannten Verfahren zur Herstellung eines Anbauteils aus Karosserieblechen erfolgt die Fügung ebenfalls falztechnisch, wobei die Randbereiche der Bleche nach dem Falzvorgang durch einseitige Wärmeeinbringung abschnittsweise miteinander verbunden werden. Zur Erhöhung der Festigkeit kann vor dem Falzvorgang auf dem Randbereich zumindest eines der beiden Bleche eine Kleberschicht aufgetragen werden.

Derzeit ist eine Fixierung der zu fügenden Bauteilkomponenten während der Aushärtung des Klebstoffs üblich. Dies wird durch konventionelle Fügetechniken wie z.B. Punktschweißen, Durchsetzfügen oder Stanznieten erreicht. Die Aushärtung des Klebstoffs erfolgt dann oft im Rahmen der Lackeinbrennung beim kathodischen Tauchlackieren.

Die Bauteilfixierung durch Punktschweißen und ähnliches ist jedoch mit zusätzlichen Investitions- und Prozesskosten verbunden. Auch kann die Kombination Kleben und Fixieren zu einer ungleichmäßigen Dickenausbildung der Kleberschicht führen, woraus variierende Festigkeiten resultieren können.

Der Erfindung liegt daher ausgehend vom Stand der Technik die Aufgabe zugrunde, eine kostengünstige und rationelle Vorgehensweise bei der Herstellung eines Kraftfahrzeugbauteils durch klebetechnische Verbindung zweier Bauteilkomponenten aufzuzeigen.

Die Lösung dieser Aufgabe besteht nach der Erfindung in einem Verfahren gemäß den Merkmalen von Patentanspruch 1.

Danach wird ein Metallblech bereitgestellt und dieses Metallblech zu einer ersten Bauteilkomponente warm umgeformt. Des Weiteren wird eine zweite Bauteilkomponente bereitgestellt, auf welche ein Klebstoff appliziert worden ist. Die erste noch warme Bauteilkomponente wird mit der zweiten, nicht erwärmten Bauteilkomponente gefügt. Hierbei wird die Wärme der ersten Bauteilkomponente zur Erzeugung der Klebeverbindung genutzt.

Bei dem auf die zweite Bauteilkomponente applizierten Klebstoff kann es sich um eine unmittelbar vor dem Fügen aufgebrachte Klebstoffschicht handeln. Es kann aber auch ein Klebstoffdepot vorab auf die zweite Bauteilkomponente aufgebracht sein. Ein solcher Klebstoff ist bei Raumtemperatur mehr oder weniger fest und nicht klebrig. Erst beim Kontakt mit dem warmen ersten Bauteil schmilzt das Klebstoffdepot, die Fügefläche wird mit Klebstoff aufreichend benetzt und beim Abkühlen der ersten Bauteilkomponente die Verbindung hergestellt.

Die Herstellung der Klebeverbindung erfolgt im Anschluss an den Warmumformvorgang der ersten Bauteilkomponente unter Nutzung der Restwärme der warm umgeformten Bauteilkomponente zur Erzeugung der Klebeverbindung. Die zweite Bauteilkomponente wird im Prozess kalt bzw. bei Raumtemperatur bereitgestellt. Die erste Bauteilkomponente und die zweite Bauteilkomponente können folglich unabhängig von einander gefertigt werden. Dies ist fertigungstechnisch und logistisch vorteilhaft.

Vorteilhafte Ausgestaltungen des grundsätzlichen Erfindungsgedankens sind Gegenstand der abhängigen Ansprüche 2 bis 13.

Bei den Kraftfahrzeugbauteilen kann es sich um Karosserie- oder Strukturbauteile eines Kraftfahrzeugs handeln, beispielsweise A-, B- oder C-Säulen, Türaufprallträger, Stoßfänger-Querträger und Ähnliches. Die Kraftfahrzeugbauteile werden aus zumindest zwei Bauteilkomponenten zusammengefügt. Zumindest eine Bauteilkomponente wird aus einem ggf. vorgeformten Metallblech in einem Presswerkzeug warm umgeformt. An dieser warm umgeformten ersten Bauteilkomponente wird zumindest eine weitere Bauteilkomponente klebetechnisch festgelegt. Bei dieser zweiten Bauteilkomponente kann es sich beispielsweise um ein Verstärkungs- oder Versteifungsprofil, einen Beschlagbauteil oder Ähnliches handeln. Eine B-Säule beispielsweise ist im Schlossbereich üblicherweise mit einem Verstärkungsprofil versehen. Erfindungsgemäß wird nun die B-Säule aus einem Stahlblech in einem Warmformprozess geformt und das Verstärkungsprofil im noch warmen Zustand der B-Säule klebetechnisch mit dieser gefügt und so komplettiert.

Der Klebstoff kann bereits vorab auf den nicht erwärmten zweiten Bauteilkomponenten appliziert sein. Sobald die beiden Baueilkomponenten in Kontakt gelangen, reagiert der Klebstoff durch die Wärme der ersten Bauteilkomponente und die Klebeverbindung stellt sich ein.

Die Restwärme der ersten Bauteilkomponente nach dem Warmformprozess wird erfindungsgemäß gezielt zur Aushärtung oder auch nur zur Fixierung der Klebeschicht genutzt. Bei einer klebetechnischen Fixierung der beiden Bauteilkomponenten zueinander wird zumindest eine Handlingfestigkeit eingestellt. Die Restaushärtung kann später beispielsweise im Rahmen der kathodischen Tauchlackierung erfolgen. Hierzu werden die erste Bauteilkomponente und die zweite Bauteilkomponente nach dem Fügen gemeinsam einer Tauchlackierung unterzogen.

Das erfindungsgemäße Verfahren ist wirtschaftlich und rationell. Zusätzliche Fügeoperationen beispielsweise durch Punktschweißen und ähnliches entfallen. Dies führt zu einer Verfahrensrationalisierung und einer Kostenreduzierung.

Die Klebstoffverbindung kann auch eine gewisse Toleranz ausgleichen. Vorzugsweise kommt ein Ein- oder Zweikomponenten-Klebstoff auf Epoxidbasis oder Polyurethanbasis zum Einsatz.

Weiterhin vorteilhaft ist, dass eine gleichmäßige Kraftübertragung durch eine großflächige Verteilung der Kräfte möglich ist. Auch lassen die erfindungsgemäß hergestellten Kraftfahrzeugbauteile eine hohe Lebensdauer sowohl bei statischer als auch bei dynamischer Beanspruchung erwarten. Zudem zeichnen sich die Kraftfahrzeugbauteile durch eine hohe Steifigkeit aus.

Ein zusätzlicher Wärmeeintrag für die Festlegung der zweiten Bauteilkomponente, beispielsweise durch Löten oder Schweißen, erfolgt nicht. Demzufolge kann auch eine Änderung der Gefügestruktur oder der mechanischen Eigenschaften der Werkstoffe vermieden werden.

Vorzugsweise liegt die Temperatur der ersten Bauteilkomponente und gegebenenfalls auch der zweiten Bauteilkomponente beim klebetechnischen Fügevorgang zwischen 50 °C und 350 °C, insbesondere bei 180 °C bis 220 °C.

Die erste Bauteilkomponente und die zweite Bauteilkomponente können aus verschiedenen Werkstoffen bestehen. Beispielsweise kann die erste Bauteilkomponente aus hochfestem Stahl mit einer zweiten Bauteilkomponente als Anbauteil aus einem Leichtmetall, beispielsweise Aluminium, gefügt werden.

Die zweite Bauteilkomponente kann auch aus einem Faser-Kunststoff-Verbundwerkstoff bestehen, insbesondere einem kohlenstofffaserverstärktem Kunststoff oder einem glasfaserverstärkten Kunststoff. Die Kombination der ersten Bauteilkomponente aus Stahl und der zweiten Bauteilkomponente aus einem Faser-Kunststoff-Verbundwerkstoff lässt für die Fertigung von Kraftfahrzeugbauteilen vielfälltige Vorteile erwarten.

Die erste Bauteilkomponente und/oder die zweite Bauteilkomponente können auch aus beschichteten Metallwerkstoffen bestehen. So kann eine Bauteilkomponente aus Stahlblech eine Oberflächenbeschichtung aus Zink oder Aluminium aufweisen. An diese erste Bauteilkomponente wird eine zweite Bauteilkomponente in Form eines Anbauteils aus Aluminium etc. klebetechnisch gefügt unter Nutzung der Restwärme der ersten Bauteilkomponente aus dem Warmformprozess.

Die erste Bauteilkomponente kann auch im Umformwerkzeug zumindest partiell gehärtet werden. Das Presshärten von Kraftfahrzeugbauteilen im Umformwerkzeug ist an sich bekannt. Hierbei werden die Bauteile warm umgeformt und, noch im Pressenwerkzeug eingespannt, gehärtet. Auf diese Weise erhält man Bauteile hoher Festigkeit und Maßhaltigkeit. Solche warm umgeformten und zumindest partiell gehärteten Bauteilkomponenten werden erfindungsgemäß mit weiteren Bauteilkomponenten klebetechnisch gefügt unter Nutzung der Restwärme, die auch nach dem Härtungsvorgang noch vorhanden ist.

Der Klebstoff zur Erzeugung der Klebeverbindung ist auf die zweite Bauteilkomponente appliziert. Wie bereits erwähnt kann es sich hierbei auch um einen bei Raumtemperatur festen oder teilfesten und in diesem Zustand nicht klebrigen Klebstoff handeln, welcher vorab, unabhängig vom Fertigungsprozess auf die zweite Bauteilkomponente aufgetragen ist und dort vorhanden ist, bis die Klebeverbindung mit der ersten Bauteilkomponente hergestellt wird. Hierbei handelt es sich quasi um ein Klebstoffdepot. Ein solches Klebstoffdepot kann auch in Form eines Klebebandes realisiert sein. Geeignete Klebstoffe sind Epoxidharz-Klebstoffe, Schmelzklebstoffe oder auch Polyurethan-Klebstoffe.

Bei einem solchen Klebstoffdepot wird die Adhäsion des Klebstoffs durch die Temperaturerhöhung beim Zusammenbringen der ersten Bauteilkomponente mit der zweiten Bauteilkomponente erreicht. Dieses Aufschmelzen des Klebstoffdepots führt zu einer Verringerung der Viskosität. Durch die geringere Viskosität wird eine ausreichende Benetzung des Verbindungsbereichs gewährleistet. Die Kohäsion und die Verbindung zwischen den beiden Bauteilkomponenten wird dann durch das Abkühlen der Schmelze erreicht, welches einhergeht mit dem Abkühlen der ersten Bauteilkomponente.

## Patentansprüche

1. Verfahren zur Herstellung eines Kraftfahrzeugbauteils aus wenigstens zwei Bauteilkomponenten, die über eine Klebeverbindung miteinander gefügt werden, **gekennzeichnet durch** folgende Schritte:
- Bereitstellen eines Metallblechs,
- Warmumformung des Metallblechs zu einer ersten Bauteilkomponente,
- Bereitstellen einer zweiten Bauteilkomponente mit einem applizierten Klebstoff,
- Fügen der ersten noch warmen Bauteilkomponente mit der zweiten nicht erwärmten Bauteilkomponente unter Nutzung der Restwärme der ersten Bauteilkomponente zur Erzeugung der Klebeverbindung.

2. Verfahren nach Anspruch 1, **dadurch gekennzeichnet, dass** die Temperatur der ersten Bauteilkomponente zum Herstellen der Klebeverbindung zwischen 50 °C und 350 °C eingestellt wird.

3. Verfahren nach Anspruch 1 oder 2, **dadurch gekennzeichnet, dass** die erste Bauteilkomponente und die zweite Bauteilkomponente aus verschiedenen Werkstoffen bestehen.

4. Verfahren nach Anspruch 3, **dadurch gekennzeichnet, dass** die erste Bauteilkomponente aus Stahl und die zweite Bauteilkomponente aus einem Faser-Kunststoff-Verbundwerkstoff besteht.

5. Verfahren nach Anspruch 4, **dadurch gekennzeichnet, dass** die zweite Bauteilkomponente aus kohlenstofffaserverstärktem Kunststoff besteht.

6. Verfahren nach Anspruch 4, **dadurch gekennzeichnet, dass** die zweite Bauteilkomponente aus glasfaserverstärktem Kunststoff besteht.

7. Verfahren nach einem der Ansprüche 1 bis 6, **dadurch gekennzeichnet, dass** die erste Bauteilkomponente und/oder die zweite Bauteilkomponente aus beschichteten Metallwerkstoffen bestehen.

8. Verfahren nach einem der Ansprüche 1 bis 7, **dadurch gekennzeichnet, dass** die erste Bauteilkomponente im Umformwerkzeug zumindest partiell gehärtet wird.

9. Verfahren nach einem der Ansprüche 1 bis 8, **dadurch gekennzeichnet, dass** auf die zweite Bauteilkomponente ein Epoxidharz-Klebstoff aufgetragen wird.

10. Verfahren nach einem der Ansprüche 1 bis 8, **dadurch gekennzeichnet, dass** das auf die zweite Bauteilkomponente ein Schmelzklebstoff aufgetragen wird.

11. Verfahren nach einem der Ansprüche 1 bis 8, **dadurch gekennzeichnet, dass** ein Polyurethan-Klebstoff aufgetragen wird.

12. Verfahren nach einem der Ansprüche 1 bis 11, **dadurch gekennzeichnet, dass** die erste Bauteilkomponente und die zweite Bauteilkomponente nach dem Fügen gemeinsam einer Tauchlackierung unterzogen werden.

13. Verfahren nach Ansprüche 12, **dadurch gekennzeichnet, dass** eine Restaushärtung der Klebeverbindung während der Tauchlackierung erfolgt.

## Claims

1. Method of producing a motor vehicle component comprising at least two component elements which are joined to one another by means of an adhesive joint, **characterised by** the following steps:
- providing a metal sheet,
- hot-working of the metal sheet to form a first component element,
- providing a second component element with an applied adhesive,
- joining the first, still hot component element to the second unheated component element using the residual heat of the first component element to generate the adhesive joint.

2. Method according to Claim 1, **characterised in that**
the temperature of the first component element is set between 50°C and 350°C for production of the adhesive joint. -

3. Method according to Claim 1 to 2, **characterised in that** the first component element and the second component element are composed of different materials.

4. Method according to Claim 3, **characterised in that**
the first component element is composed of steel and the second component element is composed of a fibre/plastic composite material.

5. Method according to Claim 4, **characterised in that**
the second component element is composed of carbon fibre-reinforced plastic.

6. Method according to Claim 4, **characterised in that**
the second component element is composed of glass fibre-reinforced plastic.

7. Method according to one of Claims 1 to 6, **characterised in that** the first component element and/or the second component element are composed of coated metal materials.

8. Method according to one of Claims 1 to 7, **characterised in that** the first component element is at least partially cured in the working tool.

9. Method according to one of Claims 1 to 8, **characterised in that** an epoxy resin adhesive is applied onto the second component element.

10. Method according to one of Claims 1 to 8, **characterised in that** a hot-melt adhesive is applied onto the second component element.

11. Method according to one of Claims 1 to 8, **characterised in that** a polyurethane adhesive is applied.

12. Method according to one of Claims 1 to 11, **characterised in that** the first component element and the second component element are jointly subjected to immersion coating after joining.

13. Method according to Claim 12, **characterised in that** a residual curing of the adhesive joint takes place during immersion coating.

## Revendications

1. Procédé de fabrication d'une pièce de véhicule automobile à partir d'au moins deux composants de pièce qui sont assemblés l'un à l'autre via une jonction collée, **caractérisé par** les étapes suivantes :
- préparation d'une tôle métallique,
- déformation à chaud de la tôle métallique pour donner un premier composant de pièce,
- préparation d'un second composant de pièce avec un adhésif appliqué,
- assemblage du premier composant de pièce encore chaud avec le second composant de pièce non chauffé en exploitant la chaleur résiduelle du premier composant de pièce pour engendrer la jonction collée.

2. Procédé selon la revendication 1, **caractérisé en ce que** la température du premier composant de pièce est réglée entre 50°C et 350°C pour réaliser la jonction collée.

3. Procédé selon la revendication 1 ou 2, **caractérisé en ce que** le premier composant de pièce et le second composant de pièce sont en matériaux différents.

4. Procédé selon la revendication 3, **caractérisé en ce que** le premier composant de pièce est en acier et le second composant de pièce est en matériau composite fibres/matière synthétique.

5. Procédé selon la revendication 4, **caractérisé en ce que** le second composant de pièce est en matière synthétique renforcée de fibres de carbone.

6. Procédé selon la revendication 4, **caractérisé en ce que** le second composant de pièce est en matière synthétique renforcée de fibres de verre.

7. Procédé selon l'une des revendications 1 à 6, **caractérisé en ce que** le premier composant de pièce et/ou le second composant de pièce sont en matériaux métalliques revêtus.

8. Procédé selon l'une des revendications 1 à 7, **caractérisé en ce que** le premier composant de pièce est au moins partiellement durci dans l'outil de déformation.

9. Procédé selon l'une des revendications 1 à 8, **caractérisé en ce qu'**une colle en résine époxy est appliquée sur le second composant de pièce.

10. Procédé selon l'une des revendications 1 à 8, **caractérisé en ce qu'**une colle fusible est appliquée sur le second composant de pièce.

11. Procédé selon l'une des revendications 1 à 8, **caractérisé en ce qu'**une colle au polyuréthane est appliquée.

12. Procédé selon l'une des revendications 1 à 11, **caractérisé en ce que** le premier composant de pièce et le second composant de pièce sont soumis conjointement à un vernissage au trempé après l'assemblage.

13. Procédé selon la revendication 12, **caractérisé en ce qu'**un durcissement résiduel de la jonction collée a lieu pendant la peinture au trempé.
